## Europäisches Patentamt
## European Patent Office
## Office européen des brevets

(19)

(11) Veröffentlichungsnummer: **0 034 742**
**B1**

(12) **EUROPÄISCHE PATENTSCHRIFT**

(45) Veröffentlichungstag der Patentschrift:
**02.01.85**

(51) Int. Cl.³: **A 01 F 25/20**

(21) Anmeldenummer: **81100880.4**

(22) Anmeldetag: **07.02.81**

(54) Vorrichtung zum Herausschneiden und Entnehmen von Blöcken aus einem Silofutterstock.

(30) Priorität: **23.02.80 DE 3006881**

(43) Veröffentlichungstag der Anmeldung:
**02.09.81 Patentblatt 81/35**

(45) Bekanntmachung des Hinweises auf die Patenterteilung:
**02.01.85 Patentblatt 85/1**

(84) Benannte Vertragsstaaten:
**AT BE CH FR GB IT LI NL SE**

(56) Entgegenhaltungen:
**EP - A - 0 026 143**
**DE - A - 2 607 179**
**DE - A - 2 916 461**

(73) Patentinhaber: **von der Heide, Hans, Ibbenbürener Strasse 17, D-4533 Laggenbeck (DE)**

(72) Erfinder: **von der Heide, Hans, Ibbenbürener Strasse 17, D-4533 Laggenbeck (DE)**

(74) Vertreter: **Schulze Horn, Stefan, Dipl.-Ing. et al, Patentanwälte Dipl.-Ing. S. Schulze Horn M.SC. Dr. H. Hoffmeister Goldstrasse 36, D-4400 Münster (DE)**

BUNDESDRUCKEREI BERLIN

## Beschreibung

Die Erfindung betrifft eine Vorrichtung zum Herausschneiden und Entnehmen von Blöcken aus einem Silofutterstock mit einem Rahmen, an dem zueinander parallele Zinken befestigt sind, und einem Messer, das an einem Träger befestigt ist, der in einem etwa der Länge des Messers entsprechenden Abstand über der durch die Zinken gebildeten Ebene als Fahrwerk auf einer U-förmig gebogenen Laufbrücke verfahrbar ist.

Eine derartige Vorrichtung ist aus der DE-A-2 307 689 bekannt. Mit dieser bekannten Vorrichtung wird der Futterblock aus dem Silofutterstock geholt und im Durchgang eines Viehstalles vor den Futtertrögen abgestellt. Die Verteilung des Futters in die einzelnen Futtertröge erfolgt dann von Hand. Dies ist nachteilig mit einem hohen Aufwand an manueller Arbeit verbunden.

Es ist Aufgabe der Erfindung, diesen Nachteil des Standes der Technik zu vermeiden und eine Vorrichtung der eingangs genannten Art zu schaffen, mit der nach dem Entnehmen eines Futterblocks das Futter ohne manuelle Arbeit verteilt werden kann.

In der EP-A-0 026 143, welche nur gemäß Art. 54 (3) und (4) EPÜ zu berücksichtigen ist, wird weiterhin eine Vorrichtung zum Herausschneiden und Entnehmen von Blöcken aus einem Silofutterstock beschrieben, mit einem Rahmen, an dem zueinander parallele Zinken befestigt sind, und einem Messer, das an einem Träger befestigt ist, der in einem etwa der Länge des Messers entsprechenden Abstand über der durch die Zinken gebildeten Ebene als Fahrwerk auf einer U-förmig gebogenen Laufbrücke verfahrbar ist, und mit einem hinter den Zinken angeordneten Futterbehälter, dessen vordere Seite offen ist und der einen Kratzboden und eine seitliche Austragöffnung für das Futter aufweist.

Die erfindungsgemäße Aufgabe wird bei einer Vorrichtung der eingangs genannten Art dadurch gelöst, daß hinter den Zinken ein Futterbehälter angeordnet ist, dessen vordere Seite offen ist, dessen hintere Seitenwand als ein Kratzboden ausgebildet ist und der eine seitliche Austragöffnung für das Futter aufweist, und daß die gesamte Vorrichtung nach dem Herausschneiden eines Futterblockes um 90 Grad verschwenkbar ist, so daß dann der Kratzboden die untere Seite des Futterbehälters bildet.

Am Ende des Kratzbogens können im Bereich der seitlichen Austragöffnung Kratzwellen angeordnet sein. Um den entnommenen Futterblock vollständig in den Futterbehälter zu befördern und Futterverluste während des Transports zu vermeiden, ist es vorteilhaft, daß an der Vorderkante des Futterbehälters ein von den Zinken durchdrungener Abstreifer vorhanden ist und die Zinken einfahrbar sind.

Der Abstreifer ist vorteilhaft in Richtung auf die offene Seite des Futterbehälters geneigt.

Im folgenden wird ein Ausführungsbeispiel der Erfindung anhand der Zeichnung näher erläutert. Es zeigt

Figur 1 eine Draufsicht der erfindungsgemäßen Vorrichtung,

Figur 2 eine Seitenansicht der Vorrichtung gemäß Figur 1,

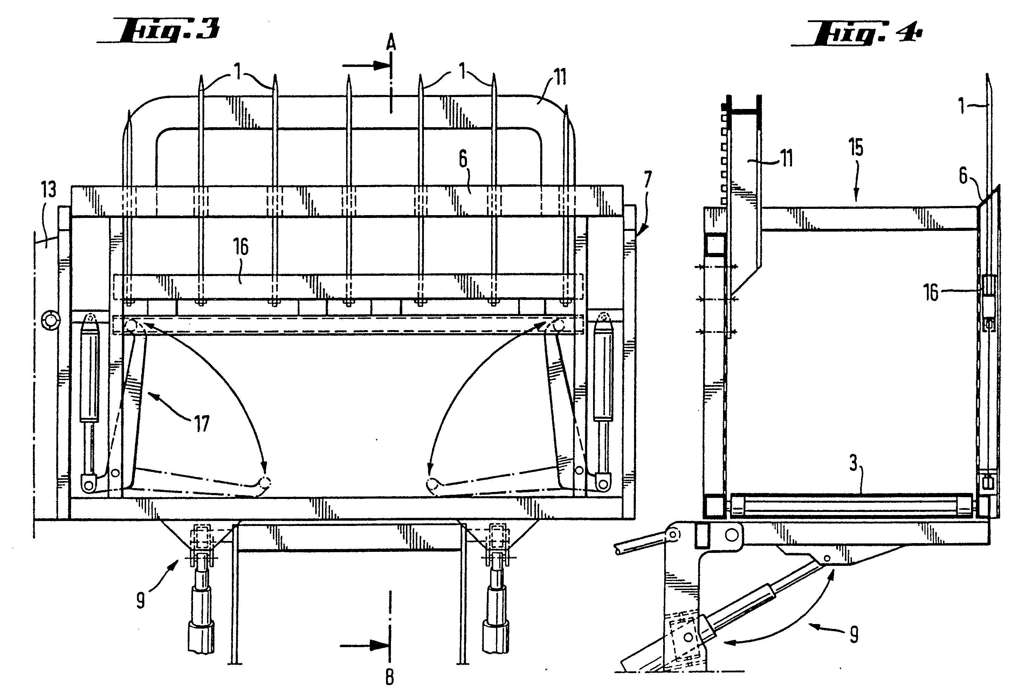

Figur 3 die Vorrichtung gemäß Figur 1 und 2 von unten und

Figur 4 einen Schnitt durch die Vorrichtung entlang der Linie A ... B gemäß Figur 3.

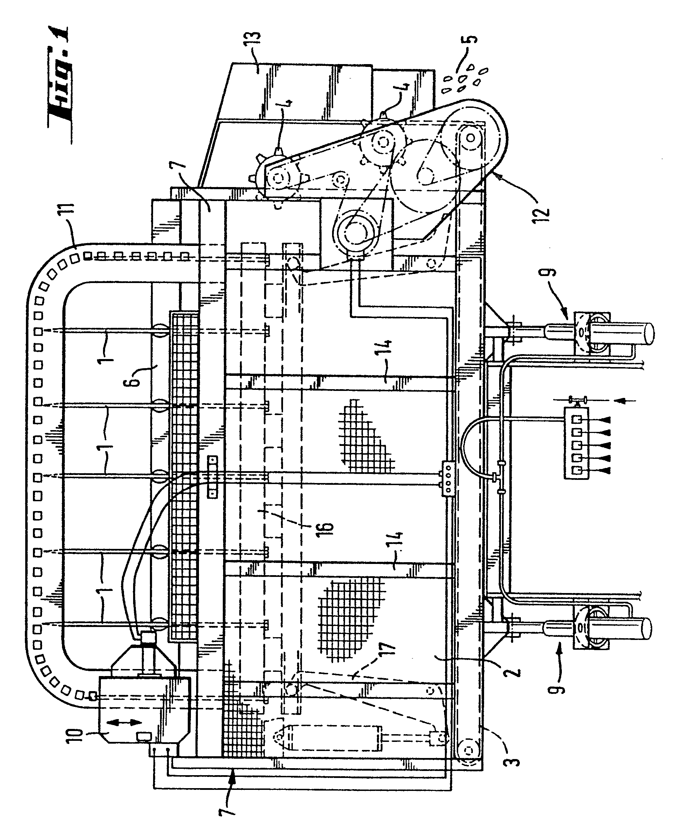

Die Figur 1 zeigt eine Draufsicht auf die erfindungsgemäße Vorrichtung, wenn man von der Schneidstellung ausgeht, bzw. eine Seitenansicht, wenn man von der Austragstellung nach dem Verschwenken der Vorrichtung um 90 Grad ausgeht. Die Vorrichtung weist einen Rahmen 7 auf, an dem zueinander parallele Zinken 1 befestigt sind. An einem Träger 10 ist ein Messer 8 befestigt, das durch Schneidhübe einen Block aus einem Silofutterstock ausscheidet. Der Träger 10 ist in einem etwa der Länge des Messers 8 entsprechendem Abstand über der durch die Zinken 1 gebildeten Ebene als Fahrwerk auf einer U-förmig gebogenen Laufbrücke 11 verfahrbar. Hinter den Zinken 1 ist ein Futterbehälter 2 angeordnet, dessen vordere Seite 15 offen ist und dessen hintere Seitenwand als ein Kratzboden 3 ausgebildet ist. An einer Seite des Futterbehälters 2 sind zwei Kratzwellen 4 unterhalb einer Abdeckung 13 angeordnet, die durch den Antrieb 12 angetrieben werden. Der Futterbehälter 2 weist ferner eine Austragöffnung 5 für das Futter auf. Ein Teil des Rahmens 7 ist als ein von den Zinken 1 durchdrungener Abstreifer 6 ausgebildet, der in Richtung auf die offene Seite 15 des Futterbehälters 2 geneigt ist. Die Enden der Zinken 1 sind durch einen Holm 16 verbunden, der in Verbindung mit einer Verschwenkeinrichtung 17 ein Einfahren der Zinken ermöglicht. Zur Stabilisierung der Vorrichtung sind Streben 14 vorgesehen. Die Vorrichtung kann mittels einer üblichen Verschwenkeinrichtung 9 um 90 Grad verschwenkt werden.

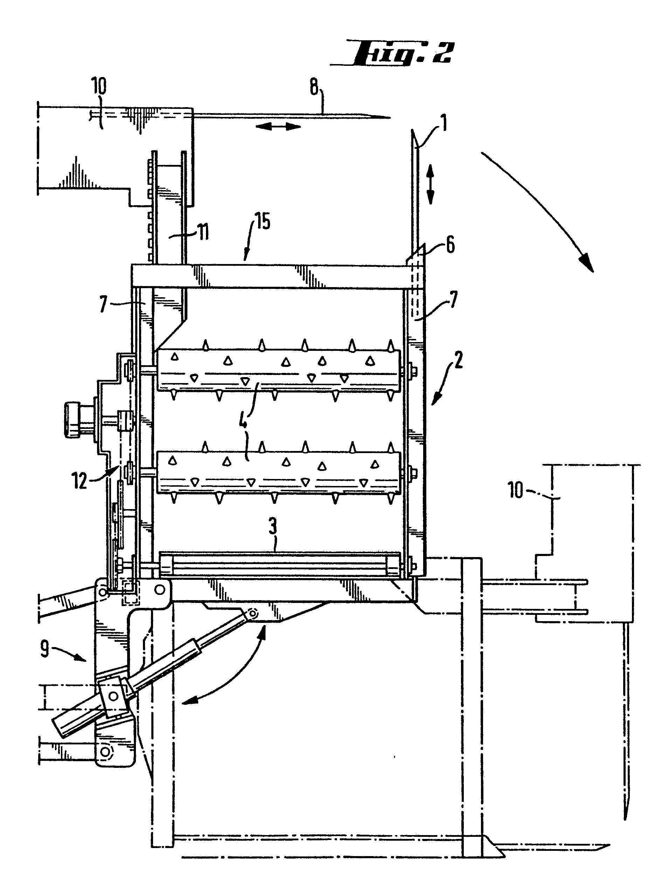

In Figur 2 zeigt die ausgezogene Darstellung die Vorrichtung in Austragstellung. Zur Verdeutlichung ist hierbei die Abdeckung 13 entfernt. Die gestrichelte Darstellung der Figur 2 zeigt die Vorrichtung in Schneid- und Entnahmestellung. Die gesamte Vorrichtung wird in bekannter Weise am Heck eines Traktors befestigt.

Die erfindungsgemäße Vorrichtung arbeitet jetzt wie folgt:

Zum Ausschneiden eines Blockes betreibt der Traktor rückwärts fahrend die Zinken 1 in die Silage hinein, wobei das Fahrwerk 10 sich an einem Ende der Laufbrücke 11 befindet. Sobald die Zinken 1 in die Silage eingedrungen sind, wird das Fahrwerk 10 vom Traktor aus in Bewegung gesetzt und das Schneidmesser 8 wird durch die Silage geführt und schneidet einen rechteckigen Block aus der Silage. Sobald das Fahrwerk 10 den am anderen Ende der Laufbrücke 15 angebrachten nicht dargestellten Endschalterklotz erreicht, wird das Fahrwerk stillgesetzt und die in ihm befindliche Mechanik wird für die Fahrt in entgegengesetzter Richtung umgeschaltet. Mittels der Schwenkeinrichtung 9 wird nun die Vorrichtung um 90 Grad geschwenkt und der Futterblock fällt in den Futterbehälter 2. Um evtl. an den Zinken 1 haftende Futterreste abzustreifen, werden die Zinken eingefahren. Der Traktor fährt nun in den Stall, und durch Inbetriebsetzung des Kratzbodens 3 und der Kratzwellen 4 kann das Futter ausgetragen werden.

Die erfindungsgemäße Vorrichtung ermöglicht es, einen Block aus einem Silofutterstock herauszuschneiden und zu entnehmen und ihn ohne manuelle Arbeit auszutragen. Es kann daher von einer hervorragenden Lösung der anstehenden Probleme gesprochen werden.

## Patentansprüche

1. Vorrichtung zum Herausschneiden und Entnehmen von Blöcken aus einem Silofutterstock mit einem Rahmen (7), an dem zueinander parallele Zinken (1) befestigt sind, und einem Messer (8), das an einem Träger (10) befestigt ist, der in einem etwa der Länge des Messers (8) entsprechenden Abstand über der durch die Zinken (1) gebildeten Ebene als Fahrwerk auf einer U-förmig gebogenen Laufbrücke (11) verfahrbar ist, und mit einem hinter den Zinken (1) angeordneten Futterbehälter (2), dessen vordere Seite (15) offen ist, dessen hintere Seitenwand als ein Kratzboden (3) ausgebildet ist und der eine seitliche Austragöffnung (5) für das Futter aufweist, wobei die gesamte Vorrichtung nach dem Herausschneiden eines Futterblocks um 90 Grad verschwenkbar ist, so daß dann der Kratzboden (3) die untere Seite des Futterbehälters (2) bildet.

2. Vorrichtung nach Anspruch 1 mit am Ende des Kratzbodens (3) im Bereich der seitlichen Austragöffnung (5) angeordneten Kratzwellen (4).

3. Vorrichtung nach Anspruch 1 oder 2 mit einem an der Vorderkante des Futterbehälters (2) angebrachten und von den Zinken (1) durchdrungenen Abstreifer (6), in den die Zinken (1) einfahrbar sind.

4. Vorrichtung nach Anspruch 3, wobei der Abstreifer (6) in Richtung auf die offene Seite (15) des Futterbehälters (2) geneigt ist.

## Claims

1. Apparatus für cutting out and taking blocks out of feed stock in a silo, comprising a frame (7) to which prongs (1) are mounted which extend in parallel with each other, and a cutter (8) secured to a carrier (10) being adapted to be moved as a carriage along a travelling bridge (11) having a U-shaped curvature with a spacing corresponding approximately to the length of the cutter above the level defined by the tongs (1), and (further comprising) a feed receptacle (2) disposed at the rear of the tongs (1) and the front side (15) of which is open, while its rear sidewall is formed as a raking bottom (3), and which receptacle includes a lateral discharge opening (5) for the feed, with the entire apparatus being adapted to be rotated about 90° upon cutting out a feed block, such that the raking bottom (3) then defines the bottom side of the feed receptacle (2).

2. The apparatus according to claim 1, comprising raking shafts (4) positioned at the end of the raking bottom (3) in the vicinity of the lateral discharge opening (5).

3. The apparatus according to claims 1 or 2, comprising a scraper (6) mounted to the front edge of the feed receptacle (2) and through which the tongs (1) pass, the tongs (1) being adapted to be retracted into the scraper (6).

4. The apparatus according to claim 3, wherein the scraper (6) is inclined toward the open side (15) of the feed receptacle (2).

## Revendications

1. Dispositif de découpage et prélèvement de blocs dans un stock de fourrage ensilé, comportant: un cadre (7) auquel sont fixées de dents (1) mutuellement parallèles; un couteau (8) qui est fixé un support (10), lequel peut être déplacé sur une distance correspondant à peu près à la longueur du couteau (8), au-dessus du plan formé par les dents (1), sur un pont mobile (11) arqué en forme de U, en tant que mécanisme de déplacement; et un récipient fourrage (2) agencé derrière les dents (1), ce récipient ayant son côté avant (15) ouvert et sa paroi arrière aménagée en fond mouvant (3), et possédant une ouverture latérale (5) pour la décharge du fourrage; l'ensemble du dispositif pouvant être soumis à un pivotement de 90° après découpage d'un bloc de fourrage, de sorte que le fond mouvant (3) constitue alors le côté dessous du récipient à fourrage (2).

2. Dispositif selon la revendication 1, comportant des arbres racleurs (4) agencés à l'extrémité du fond mouvant (3), dans la région de l'ouverture de décharge latérale (5).

3. Dispositiv selon la revendication 1 ou 2, comportant, agencé au bord avant du récipient à fourrage (2), un racloir dévêtisseur traversé par les dents (1) qui peuvent être rentrées dans celui-ci.

4. Dispositif selon la revendication 3, dans lequel le racloir dévêtisseur (6) est incliné en direction du côté ouvert (15) du récipient fourrage (2).

Fig. 1

Fig. 2

# Fig. 3

# Fig. 4

0 034 742